Europäisches Patentamt

European Patent Office

Office européen des brevets

(19)

(11) Publication number: **0 196 103**
A2

(12)

# EUROPEAN PATENT APPLICATION

(21) Application number: 86104263.8

(22) Date of filing: 27.03.86

(51) Int. Cl.⁴: **B 01 J 20/18, C 01 B 21/04**

(30) Priority: 28.03.85 US 717056

(43) Date of publication of application: 01.10.86
Bulletin 86/40

(84) Designated Contracting States: BE DE FR GB IT NL SE

(71) Applicant: AIR PRODUCTS AND CHEMICALS, INC.,
Route no. 222, Trexlertown Pennsylvania 18087 (US)

(72) Inventor: Kuznicki, Steven Mitchell, 510 Acorn Drive,
Easton, PA 18042 (US)
Inventor: Coe, Charles Gardner, 1381 Walnut Lane,
Macungie, PA 18062 (US)

(74) Representative: Dipl.-Ing. Schwabe, Dr. Dr. Sandmair, Dr.
Marx, Stuntzstrasse 16, D-8000 München 80 (DE)

(54) Maximum aluminum X-type zeolite adsorbents.

(57) Maximum Aluminium X-type zeolite, when properly acti-
vated, is found to be an exceptionally high capacity, highly
selective adsorbent, especially in the separation of nitrogen from
nitrogen-containing mixtures by selective adsorption.

EP 0 196 103 A2

132-P-US03106

## MAXIMUM ALUMINUM X-TYPE ZEOLITE ADSORBENTS

### Field of the Invention

This invention relates to novel zeolite-containing adsorbents. More particularly, this invention is directed to Maximum Aluminum X-type zeolites which demonstrate exceptional properties for the selective adsorption of nitrogen from air and which therefore may provide utility in the separation of air into nitrogen and oxygen.

### Background of the Invention

Molecular sieve zeolites have demonstrated substantial utility in the adsorptive separation of a

-2-

wide variety of liquid and gaseous mixtures. The heart of any adsorptive separation process is the adsorbent employed. The properties of the adsorbent employed can profoundly influence the production level and purity of the separated components. The most desirable properties an adsorbent can demonstrate in a given equilibrium separation process are high selectivity and high capacity towards a desired component of the mixture to be separated.

Selective adsorption by zeolites of certain components in a mixture may be attributed to one of two basic mechanisms. In the first case, a separation may be affected by differences in the size or shape of various molecules or compounds in the mixture to be separated when exposed to the extremely uniform pores inherent to the structure of a given zeolite. These uniform pores are of molecular proportions ($3\text{Å}-10\text{Å}$), with smaller molecules than the pores being adsorbed and larger molecules being rejected. It is from this ability to separate molecules by size or shape that zeolites derive their title of molecular sieves. In this generalized case, the open voids of the given zeolite framework act as a sponge, filling with those constituents of a mixture able to enter the zeolite crystals. A prime example of the molecular sieving effect would be the separation of n-paraffins from branched chain paraffins by zeolites with the appropriate pore size (about $5\text{Å}$). The calcium form of Zeolite A is commercially employed to effect this separation.

In the second, more common case, differences in the affinity of zeolites for different components of an adsorbed mixture dictate preferential or selective adsorption directed towards the species with the highest affinity by thermodynamic considerations. It is generally accepted that the active adsorption sites within the zeolite are the cations present within the zeolite cages. Separations utilizing this thermodynamically-driven separation mechanism are generally run at less than void filling conditions, so that the preponderance of adsorbate molecules interact with the cations and are not merely unselectively filling the framework voids. A comprehensive overview of the general properties of zeolite adsorbents may be found in D. W. Breck, Zeolite Molecular Sieves, J. Wiley and Sons, New York, pages 593-724 (1974).

For thermodynamically-driven adsorption processes, the quantity of a given adsorbate which is adsorbed by a zeolite at a given pressure and temperature is a function both of the affinity for the cationic adsorption sites and of the quantity of sites available for interaction. The quantity of cationic adsorption sites present within the zeolite structure is governed by the aluminum content of the zeolite in question. Electronic charge balance dictates that

-4-

there be one cationic charge present for every aluminum present in the zeolite framework. The aluminum content of zeolites is limited to an amount equal to the silicon in the zeolite such that $Si/Al \geq 1.0$, according to the so-called Rule of Lowenstein.

Zeolites span a wide range of aluminum contents from the maximum allowable (i.e., $Si/Al=1.0$) in the case of Zeolite A to virtually zero as in the case of Silicalite. Zeolite A, with its maximum aluminum content, therefore contains the maximum amount of cationic sites available for thermodynamically-driven adsorption, about 7 Meq/g on a dry weight basis.

The strength of the cationic electric fields, available for interaction with adsorbates, is dependent upon both the innate field present at the surface of the cation and the positioning of the cations within zeolite cages. The innate field at the surface is dependent upon the cation's electronic charge and the inverse square of the atomic radius of the cation. Thus, the charge density at the cationic surface increases with increasing valency and decreasing ionic radius. Small, multi-valent cations, especially calcium, have been found to be especially effective in imparting sufficient field strength within zeolites to manifest usable selectivities towards certain adsorbate mixture components. Thus Zeolite A in the calcium form is employed to selectively adsorb nitrogen from air in the Linde Lindox process as described in U.S. Patent Nos. 3,564,816 and 3,636,679.

While A-type Zeolite contains the maximum number of cationic adsorption sites theoretically possible for a zeolite, their positioning is not necessarily ideal to maximize cation-adsorbate interactions. As described in U. S. Patent No. 4,481,018, the interaction of $N_2$ with multi-valent cations in faujasite-type zeolites is somewhat stronger than in A-type zeolites and the nitrogen capacities and nitrogen/oxygen selectivities of CaX are higher than CaA under conditions leading to the utility of CaX as an air separating adsorbent if the CaX is properly activated, even though CaX contains fewer adsorption sites than CaA.

Faujasite-type zeolites are defined as those zeolites with a framework topography resembling the mineral faujasite. Such species are characterized by a relatively open zeolite framework with large (about 8 Å) pores and high (nearly 50%) void volume. Synthetic faujasites are generally subdivided into zeolites X and Y by virtue of their silica content; Zeolte Y being defined as Si/Al $\geq 1.5$, Zeolite X being defined as Si/Al $< 1.5$.

( (

While Zeolite X and Y represent a relatively smooth continuum of Si/Al ratio of the faujasite structure over a broad range, when the Si/Al ratio is lowered to about 1.2 qualitative differences appear. Extrapolation of standard synthesis techniques for Zeolite X will not produce faujasites below this boundary. As reviewed in U. S. Patent Nos. 4,289,740 and 4,407,782, studies of the variability of Si/Al ratios of faujasites terminate at this lower boundary and X Zeolite with the increased aluminum (e.g., Si/Al=1) is referred to as idealized.

Little mention of the preparation of an "idealized" 1:1 Si/Al faujasite is to be found in the prior art. In U.S. Patents 4,289,740 and 4,407,782, a zeolite is prepared by aging and then reacting various alumino silicate mixtures at extreme pressure, typically 50,000 p.s.i. This zeolite called HP, is claimed to violate the rule of Lowenstein and demonstrate a Si/Al <1 ratio, with a faujasite-type structure. However, to one skilled in the art, the x-ray unit cell constants (typically circa 25.00Å - 25.05Å) listed would infer that, in fact, Zeolite HP was similar to a mixed Na/K X-type zeolite earlier reported in East German Patents Nos. 43,221 and 58,957. While not listing a unit cell constant, the x-ray d-spacings given by the earlier East German Patents indicate a unit cell constant of 25.10Å 25.15Å. In reduced silica faujasite systems

-7-

conversion of Na/K forms to the pure Na form (as in
the case of HP), results in a reduction of $a_0$ (the
unit cell constant) by about 0.10Å unites to exactly
that reported for the "new" Zeolite HP.  The East
German Patents present gross empirical data on the
composition of the claimed "Na/K X-type zeolite,"
indicating an Si/Al ratio of about 1; however, such
estimates are subject to distortion due to inclusion
of unreacted silica and/or alumina in the product.

The only clear teaching of the preparation
of relatively pure idealized 1:1 Si/Al faujasite
appears in British Patent 1,580,928.  In that, a
method of preparation of this "reduced silica X-type
zeolite" is described wherein alumino silicate gels
art subjected to multi-day aging at low temperature,
ideally 40°C, followed by crystallization at 60°-100°C
at ambient pressure.  While the potential utility of
this material as a water softening agent has been
demonstrated (see, for example, G. H. Kuhl and H. S.
Sherry, Proceedings of the Fifth International
Conference on Zeolites, p.813, 1980), neither the
aforementioned East German Patents nor the British
Patent explore the possible adsorptive utility of
"reduced silica X-type" zeolites.  In both cases,
adsorption is used as a characterization technique,
not as a demonstration of possible utility.  In both
cases, benzene adsorption is demonstrated for the
purpose of establishing that the zeolite in question is large pored, as is standard X-type zeolite. Additionally, in both cases, water adsorption is measured and compared to X-type zeolite to establish the equivalence of crystalline void volume of standard X-type zeolite and "reduced silica X-type" zeolite. In both cases, adsorptivity is used to infer the similarity of standard X-type zeolite and "reduced silica X-type" zeolite. In neither case are the possible differences of adsorptive properties caused by reduction of the Si/Al ratio from about 1.2 characteristic of standard X-type zeolite) to the "idealized" 1:1 Si/Al Maximum Aluminum X-type zeolite disclosed.

It is known (see R. J. Neddenriep, J. Colloid, Interface Sci. 28:293 (1968) that the strength of cationic adsorption sites towards interaction with small gas molecules remains relatively constant as the Si/Al ratio of faujasites are increased from about 1.2 of standard X-type zeolites through the more siliceous Y-type zeolites. Thus, extrapolation of the series would predict little or no difference for thermodynamically-driven selective adsorption of an "ideal" 1:1 Maximum Aluminum X-type zeolite from standard X-type zeolite.

-9-

## Brief Description of the Invention

Contrary to the teachings of the prior art, it has been discovered that significant differences exist between the adsorptive properties of Maximum Aluminum X-type zeolite and standard X-type zeolite. These differences afford utility in the adsorptive separation of various mixtures of gases and liquids. Exchange of Maximum Aluminum X-type zeolite with multivalent cations (especially alkaline earths and mixtures thereof) results in novel materials which, if properly activated, demonstrate higher $N_2$ capacities and higher $N_2/O_2$ selectivites than any prior art adsorbents under conditions relevant to the manufacture of oxygen and nitrogen by selective adsorption from nitrogen-containing mixtures.

Maximum Aluminum X-type zeolite combines the most desirable properties of two popular zeolite adsorbents: A-type zeolite and Faujasite. Like Zeolite A, the maximum number of cationic adsorption sites theoretically possible for a zeolite are inherent to the Maximum Aluminum X-type zeolite structure. Like Faujasite-type zeolites, Maximum Aluminum X-type zeolite poses a large (about 8Å) pore size capable of adsorbing a wide variety of molecular species. In addition, the adsorptive selectivities

0196103

-10-

and capacities for nitrogen, and presumably other species, are substantially higher than for either comparably exchanged A-type zeolite or X-type zeolite.

When substantially (>70%) ion-exchanged with appropriate multivalent cations and properly activated (by, for example, the methods disclosed in U.S. Patent 4,481,018), aggregates containing a majority (>50% by weight) of Maximum Aluminum X-type zeolite demonstrate exceptional $N_2/O_2$ selectivities (>8.0) and capacities (>0.80 mmol/g) from air (at latm and 30°C).

In a preferred embodiment of the present invention, pelletized adsorbents containing Maximum Aluminum X-type zeolite in the form of self-bound aggregates prepared by methods disclosed in a co-filed application, (also see Example 1 below), are ion-exchanged with calcium, and properly activated. These novel materials demonstrate exceptional properties when used as a selective adsorbent in the separation of $N_2$ and $O_2$ from nitrogen-containing mixtures.

According to another embodiment of the present invention, pelletized adsorbents containing Maximum Aluminum X-type zeolite may be prepared by extrusion of Maximum Aluminum X-type zeolite or mixtures of zeolites containing Maximum Aluminum X-type zeolite. Additionally, the extrudate may contain binder materials. These pellets, when ion exchanged

-11-

and properly activated, may also be used as a selective adsorbent in the separation of various gases and liquids.

## Detailed Description of the Invention

Zeolite molecular sieves are well established as effective selective adsorbents. While Faujasite-type zeolites are known to be effective adsorbents in geometrically selective void filling procedures, it has only recently been recognized that typical zeolite activation conditions may be detrimental to the cationic adsorption sites in multivalent exchanged Faujasite-type zeolites. As disclosed in U.S. Patent No. 4,481,018, and its Continuation-in-Part Application Serial No. 614,086, filed 24 May 1984, a copy of which is filed herewith, in faujasite, multivalent cations demonstrate a strong and detrimental propensity to hydroxylate if care is not taken to minimize the amount of water present at any given temperature during thermal activation. If appropriate care is exercised in the activation of polyvalent exchanged Faujasite-type zeolites, such that after dehydration a high proportion of the multivalent cations exist in a dehydroxylated state, free to interact with adsorbate molecules, the sites are seen to be qualitatively more effective than comparable multivalent cations in faujasite-type zeolites

-12-

which have not been activated properly and contain a majority of hydroxylated cations. One method of determining whether such zeolites have been properly activated is to measure their CA Index as defined in Serial No. 614,086, the definition of which is incorporated herein by reference. To be effective as an adsorbent for the separation of nitrogen from nitrogen-containing gases, the CA index should be maintained at no less than 50.

To one skilled in the art, slight increases in capacities for adsorbate molecules would be anticipated in the Faujasite Zeolite series if the aluminum content and, thus, the cation content of X-type zeolite, were increased by decreases in the Si/Al ratio from the typical (about 1.2) to an idealized 1.0, if appropriate care were taken in activation. However, neither the small body of prior art on the idealized "reduced silica X-type" zeolites, nor extrapolation of prior art knowledge as to the relative uniformity of the quality of cationic sites in Faujasites of varying silica/alumina ratios, would lead to the expectation of qualitatively different cationic sites. Such qualitatively different sites would be needed to induce pronounced selectivity changes in the adsorptive behavior of Maximum Aluminum X-type zeolite versus the slightly more siliceous typical X-type zeolites.

-13-

Surprisingly, it has been discovered that reduction of the Si/Al ratio of Faujasites to an idealized 1.0 leads to pronounced differences in the adsorptive properties of Maximum Aluminum X-type zeolite versus typical X-type zeolite including unexpected improvements in the selectivity of polyvalent exchanged materials toward certain components in gaseous and liquid mixtures. This difference is clearly manifested in heretofore unknown selectivities and capacities demonstrated by calcium-exchanged Maximum Aluminum X-type zeolites for the adsorption of nitrogen from nitrogen-containing mixtures. Further, since Maximum Aluminum X-type zeolite is the only wide-pored zeolite adsorbent having the idealized 1.0 Si/Al ratio, it will demonstrate this phenomenon of increased selectivity for a wide variety of mixtures containing molecules up to about 8Å in diameter.

## Examples

In these examples, all adsorbents were tested in a pelletized form. Pelletization is necessary in virtually all practical adsorptive separation processes due to engineering considerations such as the high pressure drop experienced by systems employing small adsorbent particles.

-14-

The equilibrium capacities of nitrogen and oxygen from air and the adsorbent capacities for pure nitrogen were determined for a bed of each adsorbent contained in an eight inch long, one inch I.D. section of a 24 inch stainless steel tube; the two end eight inch portions containing insulation and packing, which was suspended in a Lindberg three zone tube furnace. The adsorbents were activated under flow of dry nitrogen and controlled temperature ramp in a manner suggested by U.S. Patent No. 4,481,018, to leave a high proportion of the zeolite cations in a dehydroxylated state. To ascertain the nitrogen capacity and nitrogen selectivity of each adsorbent at 30°C and one atmosphere pressure, a stream of dry zero grade air was passed through the activated adsorbent bed at 30°C for sufficient time to ensure equilibrium (approximately 12 hours). To analyze the adsorbed product, the adsorbent bed was thermally desorbed at about 400°C into a collection chamber, a gas burette at atmospheric pressure. Void volume measurements in the adsorbent beds were determined by helium displacement. Measuring the displaced volume in the gas collector, coupled with void volume measurements, yielded the amount of nitrogen plus oxygen adsorbed. The adsorbed gases were analyzed chromatographically for determination of oxygen and nitrogen content, establishing the amounts of both oxygen and nitrogen adsorbed by multiplication with the gross amount of oxygen plus nitrogen previously determined.

-15-

The selectivity ($\alpha$) of the nitrogen-oxygen separation is calculated from:

$$\alpha^{N_2}_{O_2} = \frac{[N_2] \text{ adsorbed}}{[O_2] \text{ adsorbed}} \cdot \frac{[O_2] \text{ gas phase}}{[N_2] \text{ gas phase}}$$

Nitrogen capacities for pure gas were determined in a similar manner. Following activation, the adsorbent beds were allowed to equilibrate in a stream of dry nitrogen at 30°C. Thermal desorption coupled with void volume measurements by helium displacement into a gas buret at atmsopheric pressure, yielded amount adsorbed which is referred to as nitrogen capacity.

The zeolite content of adsorbents in the sodium form was determined by XRD powder pattern diffractometry by ratioing lines intensities to various pure zeolite standards. Zeolite contents are stated as ranges in that powder pattern intensities vary somewhat with Si/Al ratio and cationic content.

Example 1 - Preliminary Example

Extensive work on the formation of powdered Maximum Aluminum X-type zeolite from meta kaolin,

-16-

reported in a co-filed application (Serial No. _____), resulted in the discovery that essentially pure Maximum Aluminum X-type zeolite could be prepared in one step without aging, at a temperature of 50°C or slightly greater.

Pellets were formed by extrusion of 30 wt. percent starch with kaolin clay as 1/8" aggregates. A burnout procedure was conducted by flowing air over the extrudate at 700°C resulting in very porous meta kaolin pellets. 22.2 g of these pellets were mixed with 39.0g NaOH, 18.2g (anhydrous basis) KOH and 234cc $H_2O$ such that:

$$SiO_2/Al_2O_3 = 2.0$$

$$(Na_2O + K_2O)/SiO_2 = 3.25$$

$$Na_2O/(Na_2O + K_2O) = 0.75$$

$$H_2O/(Na_2O + K_2O) = 20$$

This mixture was reacted under constant circulation at about 50°C for a period of 10 days. The resultant product was found to have significantly different X-ray diffraction pattern intensities on a line per line basis (compared to standard X-zeolite) however, the summation of all major peaks yielded total intensities which were virtually identical.

Gross elemental analysis by XRF indicated that the solid faujasite aggregates possessed a Si/Al ratio of about 0.994 and a calcium exchange capacity of about 7.03m equiv. per gram (compare to the expected 7.04m equiv/g expected for absolutely pure Maximum Aluminum X-type zeolite).

Definitive determination of Si/Al ratio, including X-ray unit cell constant is possible, if a relatively pure sample is available. A unit cell constant of about 25.02Å would be anticipated for a perfect 1.0 Si/Al faujasite. This product was found (in the sodium form) to demonstrate a unit cell constant of 25.03, inferring Si/Al = 0.99.

The combination of gross empirical analysis, cation exchange capacity and XRD information conclusively demonstrate that this product is an essentially pure body of Maximum Aluminum X-type zeolite.

Example 2 (Comparative)

An 83.9 g sample (anhydrous basis) of a commercial adsorbent sold as calcium X-type zeolite (8-12 mesh beads) was heated from ambient temperature to 400°C at the rate of 2 degrees per minute under a dry nitrogen flow G-rate of 4 lb. mole/hr./ft.$^2$. The

-18-

adsorbent bed was held at 400° under this flow for approximately 16 hours. Following this activation, the sample was cooled and equilibrated in zero grade air at 1 atmosphere pressure in the previously described manner.

Analysis of the adsorbed gases revealed a capacity of nitrogen from air of 0.46 m moles/g and a nitrogen/oxygen selectivity of 5.4 under these conditions.

The capacity of the adsorbent for pure nitrogen at 30°C and one atmosphere pressure, as determined by the previously described methods, yielded a result of 0.50 m moles/g under these conditions.

XRD analysis of the sample revealed a zeolite content of about 50-55 percent X-type zeolite and ∿20 percent A-type zeolite. Chemical analysis indicated that the zeolite phases were exchanged to about 80 percent of their potential exchange capacity.

Example 3 (Comparative)

To ascertain the full adsorptive potential of this commercial CaX sample, a portion was subjected to repeated calcium exchanges such that the resulting adsorbent was at least 95% in the calcium form. An 88.1 g sample (anhydrous basis) was activated and equilibrated in the manner of Example 1, the capacity of this calcium loaded sample of nitrogen from air at 30°C and one atmosphere pressure was found to be 0.64 m moles per gram.

The capacity of the adsorbent for pure nitrogen at 30°C and one atmosphere pressure was found to be 0.71 m moles/g as determined by the previously described methods.

Examples 2 and 3 utilize a commercial X-type zeolite which is, in fact, a mixture of X and A zeolites. A-type zeolite in the calcium form is a nitrogen selective zeolite adsorbent in its own right and is commercially employed as such. While the nitrogen capacity of the A phase of the commercial adsorbents contribute to the overall nitrogen capacity of the adsorbents, the nitrogen-oxygen selectivity of CaA is known to be significiantly lower than that of CaX and thus acts to dilute the selectivity of mixed phase adsorbents, in comparison to adsorbents employing only CaX as the active phase.

( ( 

-20-

### Example 4 (Comparative)

To ascertain the properties of a nitrogen selective adsorbent employing solely CaX as the active phase, a sample of commercial NaX zeolite 8-12 mesh beads (70-75% X-type zeolite with about 20% inert binder) was subjected to repeated calcium exchanges such that the resulting adsorbent was at least 95% in the calcium form.

A 98.1 gram sample (anhydrous basis) was heated from ambient temperature to 400°C at the rate of 2 degrees per minute under a dry nitrogen flow G-rate of 4 lb. mole/hr./ft.$^2$. The adsorbent bed was held at 400°C under this flow rate for approximately 16 hours. Following this activation, the sample was cooled and equilibrated in zero grade air at 1 atmosphere pressure in the previously described manner.

Analysis of the adsorbed gases revealed a capacity of nitrogen from air of 0.70 m moles per gram and a nitrogen/oxygen selectivity of 7.3 under these conditions.

The capacity of the adsorbent for pure nitrogen at 30°C and one atmosphere pressure, as determined by the previously described methods, yielded a result of 0.78 m moles/g under these conditions.

Example 5

A sample of mixed Maximum Aluminum X-type zeolite and A-type zeolite (about 50-60% Maximum Aluminum X-type zeolite and ∿20% Å) in the form of 1/8 inch extrudates was subjected to repeated calcium exchanges such that >95% of the cations were in the calcium form.

A 76.6 g sample (anhydrous basis) of this material was activated and equilibrated in the manner of Examples 2-4. Adsorptive analysis of this sample at 30°C and one atmosphere pressure revealed a nitrogen capacity from air of 0.88 m moles/g and a nitrogen/oxygen selectivity of 8.6 under the conditions tested.

The capacity for pure nitrogen at 30°C and one atmosphere pressure was determined to be 0.97 m moles/g by the previously described methods.

Not only were the nitrogen capacities notably higher for this sample than any of the X or X+A samples of Examples 2-4, but the nitrogen/oxygen selectivity of the Maximum Aluminum X-type zeolite was of sufficient degree to overcome the dilutent effects

-22-

of the A phase and out-perform even undiluted standard CaX. Heretofore, CaX was the prior art material known to demonstrate the maximum $N_2$ capacities and selectivities under this range of conditions.


Example 6

To examine the effect of increasing the ratio of maximum aluminum X to A, a sample containing about 70-80% Maximum Aluminum X-type zeolite and 15% A-Zeolite in the form of 1/8 inch extrudites was subjected to repeated clacium exchanges such that a preponderance (>95%) of the cationic adsorption sites were in the calcium form.

A 75.5 g sample (anhydrous basis) of this material was activated and equilibrated in the manner of the previous examples. Adsorptive analysis of this sample at 30°C and one atmosphere pressure revealed a nitrogen capacity from air of 1.00 m moles/g and a nitrogen/oxygen selectivity of 10.0 under these conditions. These properties are unobtainable from any known prior art zeolite adsorbent.

The capacity for nitrogen at 30°C and one atmosphere pressure was determined to be 1.15 m mole/g by the previously described methods.

-23-

Example 7

To examine the effect of the selectivity diluting A zeolite, a high purity sample of self-bound Maximum Aluminum X-type zeolite (about 90+ percent Maximum Aluminum X-type zeolite) in the form of 1/8 inch extrudates was subjected to repeated calcium exchanges such that a preponderance (>95%) of the cationic adsorption sites were in the calcium form.

An 81.8 g sample (anhydrous basis) of this material was activated and equilibrated in the manner of the previous examples. Adsorptive analysis of this sample at 30°C at one atmosphere pressure revealed a nitrogen capacity from air of 0.83 m mol/g and a nitrogen/oxygen selectivity of 10.6 under these conditions.

The expected selectivity rise coupled with the unexpected capacity decline (compared to Examples 5 and 6) indicated that the interaction of water with calcium during activation was qualitatively different from the case of other faujasites and that activation of calcium X-type zeolite might be inadequate to demonstrate the maximum capabilities of Maximum Aluminum X-type zeolite.

Example 8

-24-

A 67.7g (anhydrous basis) sample identical to that of Example 7 was activated by heating from ambient temperature to 400°C at a rate of 1°C/min. under a flow of dry nitrogen at a g-rate of 9 lb. mole/hr./ft.$^2$. Cooling and equilibration of the sample with air was accomplished by the methods of the previous examples.

Adsorptive analysis revealed a capacity of nitrogen from air of 1.08m moles/g at 30°C and a nitrogen/oxygen selectivity of 11.5 was observed under these conditions. The capacity for pure nitrogen at 30°C and one atmosphere pressure was determined to be 1.18m moles/g by the previously described methods.

The adsorption capacities and selectivities for X, X+A, Maximum Aluminum X-type zeolite and Maximum Aluminum X-type zeolite + A in the $N_2/O_2$ system at 30°C and one atmosphere pressure are summarized in Table I. A sample identical to that of Example 7 was also activated by heating from ambient temperature to 400°C under high vacuum and found to have a CA index of 152.

Table I

Nitrogen Capacity and Selectivity at 30°C and One Atmosphere Pressure

| | % X | % MAX* | % A | Calcium Exchange % | $N_2/O_2$ Selectivity | $N_2$ Capacity (From Air) (m equiv./gram) | $N_2$ Capacity (Pure Gas) |
|---|---|---|---|---|---|---|---|
| Example 2 | 50-55 | --- | 20 | 80 | 5.4 | 0.46 | 0.50 |
| Example 3 | 50-55 | --- | 20 | 95+ | 6.8 | 0.64 | 0.71 |
| Example 4 | 70-75 | --- | trace | 95+ | 7.3 | 0.70 | 0.78 |
| Example 5 | --- | 50-60 | 20 | 95+ | 8.6 | 0.88 | 0.97 |
| Example 6 | --- | 70-80 | 15 | 95+ | 10.0 | 1.00 | 1.15 |
| Example 7 | --- | 90+ | --- | 95+ | 10.6 | 0.83 | N.A. |
| Example 8 | --- | 90+ | --- | 95+ | 11.5 | 1.08 | 1.18 |

*MAX = Maximum Aluminum X-type Zeolite
N.A. = Not Available

0196103

-26-

Clearly the large differences, especially in selectivity, are not explainable solely from the small quantitative increase in cation concentration that Maximum Aluminum X-type zeolite represents in comparison to X-type Zeolite.

The prior art on the production of "Reduced Silica" X-type zeolites is devoid of mention of seeding as a mechanism to induce nucleation of appropriate alumino silicate gels and to thereby eliminate the extended aging period practiced in British Patent No. 1,580,928. It has now been discovered, however, that appropriate alumino silicate gels may be seeded to induce the rapid formation of Reduced Silica X-type zeolites without the induction period required in prior art practices.

Example 9 - Control

In a manner analogous to the methodology employed in the '928 patent, 23.5 grams of 50% aqueous NaOH was employed to solubilize 19.9 grams Al(OH)$_3$ (59.8% Al$_2$O$_3$). In a separate container, 56.5 grams NaOH 50% aqueous solution was diluted with 179cc deionized water. To this solution was added 21.2 grams (anhydrous based) KOH and 48.9 grams sodium silicate (8.9% Na$_2$O, 28.7% SiO$_2$). The two solutions

were combined under agitation (at approximately 700 RPM), heated in a steam bath at 75°C and left to react for four hours. The reaction mixture had the following overall composition:

$$SiO_2/Al_2O_3 = 2.0$$

$$(Na_2O + K_2O)/SiO_2 = 3.25$$

$$Na_2O/(Na_2O + K_2O) = 0.75$$

$$H_2O/(Na_2O + K_2O) = 20$$

Following filtration drying, the product was found to be essentially non-crystalline.

In principle, if nucleation were the key step in the formation of Reduced Silica X-type zeolite, seeding with any faujasitic zeolite at the appropriate point in the reaction would direct the synthesis toward the desired species. With clay-derived starting materials, using an equilibration or delay period, seeding is necessary to induce the formation of pure product.

-28-

## Example 10

On the hypothesis that the equilibration period could be markedly reduced for presolubilized alumino silicate gels, immediate seeding of the reaction mixture was attempted.

A mixture identical to that used in Example 9 was prepared. Immediately after the reactants were combined, one gram of clay-derived Maximum Aluminum X-type zeolite was added with stirring and the seeded mixture was allowed to crystallize at 75°C for four hours.

Analysis of the product indicated a highly crystalline phase which was estimated to be approximately 95% zeolite of the faujasite family by XRD powder pattern diffractometry. The relative intensities of the XRD powder pattern peaks were reminiscent of standard (as opposed to Maximum Aluminum) X-type zeolite and immediately and obviously differentiatable from Maximum Aluminum X-type zeolite.

Elemental analysis of this composition yielded a gross ratio Si/Al = 1.04, well within the range of "Reduced Silica" X-type zeolite as taught by Kuhl and Sherry. Elemental analysis of the exchangeable cationic content of the sample (sodium, potassium, calcium, magnesium) balanced with the aluminum content of the zeolite such that eq. cation/eq. aluminum = 0.99+ indicating that essentially all the aluminum present in the sample was present within the crystalline phase. Thus, the Si/Al ratio of 1.04 represented a maximum for the zeolite phase and the true Si/Al ratio was less than or equal to 1.04.

An XRD unit cell constant ($a_0$) for this material of 25.03 Å was established and indicates an Si/Al ratio of approximately 1.0. Noting the XRD indication of faujasite content and the elemental ratios, combined with the reactant sources, it must be concluded that this material is the LSX previously disclosed in the '928 patent, and that seeding at elevated temperatures reduces the necessary preparation time by a full order of magnitude or more.

However, while the XRD pattern of both LSX and Maximum Aluminum X-type zeolites clearly indicate that they are both members of the faujasite family of zeolites, (similar to the case of zeolites X and Y) qualitative differences in the spectrum clearly differentiate these species. This difference in XRD spectrum is clear from the comparative ordering of the strongest peak intensities of LSX and Maximum Aluminum X-type zeolite as listed below.

-30-

| Order of XRD Peak Intensities | LSX | MAX[*] |
|---|---|---|
| | (Associated Miller Index) (hkl) | |
| 1 | 111 | 111 |
| 2 | 533 | 751 |
| 3 | 751 | 642 |
| 4 | 642 | 533 |
| 5 | 220 | 331 |

[*] = Maximum Aluminum X-type zeolite

These conspicuous differences, combined with the equivalence of these materials on an elemental and unit cell constant basis, indicate that these materials represent related but different zeolite species (analogous to the related faujasites X and Y).

-31-

While this invention has been described with reference to specific examples, it will nonetheless be understood by those skilled in the art that other variations of process conditions and parameters may be employed without departing from the true spirit of the invention. It is intended that the claims which follow should be construed to encompass all such variations.

## Statement of Industrial Utility

The present invention comprises an adsorbent composition useful in the separation of gaseous and liquid mixtures, and particularly useful in the adsorption of nitrogen from nitrogen-containing gas mixtures such as air.

-32-

## Claims:

1.  A polyvalent ion exchanged adsorbent composition comprising at least 50% by weight Maximum Aluminum X-type zeolite, said zeolite having a majority of its exchangeable ion capacity in the dehydrated/dehydroxylated polyvalent form.

2.  The adsorbent composition of Claim 1 wherein said polyvalent ion is selected from the group of alkaline earth cations and mixtures thereof.

3.  The adsorbent composition of Claim 1 comprising at least 70% by weight Maximum Aluminum X-type zeolite.

4.  The adsorbent composition of Claim 1 wherein said Maximum Aluminum X-type zeolite portion has at least 70% of its exchangeable capacity in the calcium form.

-33-

5. The adsorbent composition of Claim 1 wherein said Maximum Aluminum X-type zeolite portion has at least 90% of its exchangeable capacity in the calcium form.

6. The adsorbent composition of Claim 1 having an $N_2/O_2$ selectivity (from air at one atmosphere pressure and 30°C) of at least 8.0.

7. The adsorbent composition of Claim 1 having an $N_2/O_2$ selectivity (from air at one atmosphere pressure and 30°C) of at least 9.0.

8. The adsorbent composition of Claim 1 having an $N_2/O_2$ selectivity (from air at one atmosphere pressure and 30°C) of at least 10.0.

9. The adsorbent composition of Claim 1 having an $N_2/O_2$ selectivity (from air at one atmosphere pressure and 30°C) of at least 11.0.

10. The adsorbent composition of Claim 1 having an $N_2$ Capacity (from air at one atmosphere pressure and 30°C) of at least 0.80 m mol/g.

0196103

-34-

11. The adsorbent composition of Claim 1 having an $N_2$ Capacity (from air at one atmosphere pressure and 30°C) of at least 0.90 m mol/g.

12. The adsorbent composition of Claim 1 having an $N_2$ Capacity (from air at one atmosphere pressure and 30°C) of at least 1.00 m mol/g.

13. The use of the composition of Claim 1 in the adsorption of nitrogen from a mixture of gases containing nitrogen.

14. The use of the composition of Claim 1 in the adsorption of nitrogen from air.

15. In a process for the adsorption of nitrogen from nitrogen containing gases, the improvement which comprises contacting said nitrogen containing gases with a polyvalent ion exchanged composition containing at least 50% by weight Maximum Aluminum X-type zeolite, said zeolite having a majority of its exchangeable ion capacity in the dehydrated/dehydroxylated polyvalent form.

0196103

-35-

16. The process of Claim 15 wherein at least 70% of said exchangeable capacity is in the dehydrated/dehydroxylated Calcium form.

17. The process of Claim 16 wherein at least 90% of said exchangeable capacity is in the dehydrated/dehydroxylated Calcium form.

18. The process of Claim 16 wherein said composition contains at least 70% by weight Maximum Aluminum X-type zeolite and at least 70% of said exchangeable capacity is in the dehydrated/dehydroxylated Calcium form.

19. The process of Claim 18 wherein at least 90% of said exchangeable capacity is in the dehydrated/dehydroxylated Calcium form.

20. The process of Claim 19 wherein said composition contains at least 90% by weight Maximum Aluminum X-type zeolite and at least 90% of said exchangeable capacity is in the dehydrated/dehydroxylated Calcium form.